# FASCICULE DE BREVET EUROPEEN

(11) **EP 0 611 875 B1**
(45) Date de publication et mention de la délivrance du brevet: **19.11.1997**
(21) Numéro de dépôt: 94470002.0
(22) Date de dépôt: 17.02.1994
(51) Int. Cl.: E21D 9/00

(54) **Ligne de tuyaux de fonçage et tuyau de fonçage correspondant**
Rohrvortriebsstrang und entsprechendes Vortriebsrohr
Forward thrust pipeline and corresponding forward thrust pipe

(30) Priorité: 19.02.1993 FR 9301942
(43) Date de publication de la demande: 24.08.1994
(73) Titulaire: PONT-A-MOUSSON S.A., 54000 Nancy (FR)
(72) Inventeur: Hein, HansGeorg, D-6604 Brebach (DE); Stevens, William, Borrowash, Derby (GB); Becker, Yves, F-54700 Pont-A-Mousson (FR); Girka, Alain, F-54700 Pont-A-Mousson (FR)
(74) Mandataire: Puit, Thierry

(56) Documents cités:
- EP-A- 0 247 496
- DE-A- 3 703 580
- DE-A- 3 837 161

## Description

La présente invention concerne une ligne de tuyaux de fonçage, du type constitué d'une succession de tuyaux de fonçage comportant chacun :
- un tube intérieur métallique, notamment en fonte, comportant à une extrémité une tulipe d'emboîtement évasée présentant une certaine profondeur, et, à son autre extrémité, un bout uni destiné à être emboîté sur une certaine longueur dans la tulipe d'emboîtement d'un tuyau adjacent, et
- un habillage dudit tube intérieur, extérieurement cylindrique, enveloppant ledit tube intérieur sur une partie de sa longueur distincte de son bout uni et définissant le diamètre extérieur maximal du tuyau.

Chaque tuyau de fonçage de ce type constitue un maillon d'une ligne de canalisation. Lors de l'installation d'une telle ligne de canalisation par fonçage, l'on introduit une succession de tels tuyaux dans un puits de départ, et chaque tuyau est emboîté sur le précédent puis poussé dans la direction de la ligne de canalisation, dans un tunnel préalablement percé par une machine appelée microtunnelier. Ainsi, chaque tuyau doit assurer la transmission d'un effort de poussée principalement orienté dans l'axe de la canalisation. Cette sollicitation axiale pose un certain nombre de problèmes techniques, et les configurations du tuyau proprement dit et de la jonction entre tuyaux successifs doivent être adaptées à cette sollicitation.

Ainsi, pour limiter les entraînements de terrain par la canalisation foncée, et par suite, les efforts de poussée et donc les sollicitations de compression appliquées aux tuyaux, il est indispensable que la géométrie extérieure des tuyaux soit la plus cylindrique possible, et que les jonctions ne débordent pas de l'enveloppe cylindrique dessinée par les tuyaux. La jonction entre les tuyaux successifs doit donc être intégrée dans l'épaisseur apparente du tuyau.

Le EP-A-247 496 décrit une ligne de tuyaux de fonçage du type précité, qui satisfait donc à l'impératif ci-dessus.

Toutefois, la structure selon cet art antérieur n'est pas exempte d'inconvénients.

En effet, chaque tuyau de fonçage possède un revêtement extérieur d'habillage, éventuellement confiné dans une chemise extérieure en acier, et arrêté à une distance telle de l'extrémité du tuyau du côté non évasé qu'après emboîtement et au cours du fonçage, il ne peut y avoir contact de poussée directe sur ce revêtement, la poussée étant transmise par la fonte à fond d'emboîtement. Cette structure possède un certain nombre d'inconvénients :
1) compte tenu du contact fonte sur fonte entre le fond d'emboîtement ou tulipe d'un tube et l'extrémité lisse ou bout uni du tube adjacent, il existe un risque d'endommagement de ces extrémités, notamment de leur revêtement intérieur, pendant les efforts de poussée auxquels sont soumis les tuyaux pendant le fonçage. En outre, comme il y a contact fonte sur fonte au niveau du fond de l'emboîtement, la poussée maximale admissible par un tuyau est limitée par la section transversale minimale du tube en fonte sollicité en compression. La limitation de la poussée maximale admissible par un tuyau conduit à limiter la portée de la ligne de canalisation entre deux puits d'accès, et de ce fait, à augmenter le coût de la pose et la gêne due à l'augmentation des sites en travaux.
2) Pendant l'opération de fonçage, le tunnelier qui creuse le sol permet, grâce à un bouclier articulé, de corriger en permanence l'orientation du fonçage, et de ramener l'axe de la trajectoire réelle sur celui visé. Ces corrections conduisent à un tracé en serpentin de la ligne de canalisation, donc à des angulations imposées à chaque jonction au cours de sa progression dans le terrain. La transmission de l'effort de poussée doit donc pouvoir être assurée, au niveau de chaque jonction, en présence d'une légère déviation angulaire.

La liaison à fond d'emboîtement du tuyau de fonçage selon l'état de la technique précité étant a priori rigide, elle est mal adaptée aux déviations angulaires que doivent accepter les jonctions au cours du fonçage. Ainsi, le comportement de la jonction en poussée et sous déviation angulaire est incertain, avec des risques d'endommagement aggravés et éventuellement des problèmes d'étanchéité.

On connaît également, par le document DE-A-37 03 580, une ligne de tuyaux de fonçage du type précité où là encore le revêtement extérieur d'habillage ne participe pas à la transmission des efforts de poussée, ceux-ci étant transmis par le seul contact d'un tube métallique sur l'autre. Les efforts axiaux sont alors transmis soit par le contact fonte sur fonte entre le fond d'emboîtement d'un tube et le bout uni du tube adjacent, auquel cas on retrouve les inconvénients précédemment mentionnés, soit par l'appui de la face frontale de l'emboîture d'un tube contre un relief de poussée en saillie externe sur le bout uni du tube adjacent, le longueur de bout uni emboîtée à chaque jonction entre tuyaux étant alors inférieure à la profondeur de la tulipe d'emboîtement. Dans ce dernier cas, il est par conséquent nécessaire de munir le bout uni d'une bague externe soudée ou d'un renflement, ce qui complique la fabrication de tels tuyaux et en augmente considérablement le coût de production.

Etant donné cet état de la technique, l'invention se propose de fournir une ligne de tuyaux de fonçage remédiant aux inconvénients cités précédemment, avec notamment des tuyaux de fonçage acceptant sans dommages des poussées axiales élevées, ce qui permet d'espacer considérablement les puits d'accès, permettant de s'adapter au tracé éventuellement serpentant créé par le microtunnelier.

A cet effet, l'invention a pour objet une ligne de tuyaux de fonçage du type précité où à chaque jonction entre tuyaux, la longueur d'extrémité lisse emboîtée est inférieure à ladite profondeur d'emboîtement, caractérisée en ce que l'habillage comporte d'une part une chemise extérieure cylindrique centrée sur ledit tube intérieur et recouvrant la tulipe de façon à définir un espace annulaire se rétrécissant au droit de la tulipe, et d'autre part au moins un matériau de remplissage confiné dans ledit espace annulaire, la poussée axiale étant transmise, côté bout uni, de la tranche d'extrémité de la tulipe à au moins une partie de l'habillage, sans contact axial entre les tubes intérieurs des tuyaux adjacents.

Suivant d'autres caractéristiques :
- une cale de répartition de poussée, notamment de forme annulaire, est interposée entre la tranche d'extrémité de la tulipe et l'habillage adjacent ;
- ladite cale de répartition de poussée a un diamètre extérieur inférieur au diamètre intérieur de ladite chemise extérieure ;
- le matériau de remplissage s'arrête à une faible distance en retrait d'une extrémité de la chemise extérieure, de façon que la chemise forme un prolongement recouvrant la cale de poussée ;
- lorsque, aux extrémités de chaque tuyau, la chemise se termine dans le plan d'extrémité de la tulipe et dans celui du matériau de remplissage, la cale de répartition de poussée a un diamètre extérieur au plus égal à celui de ladite chemise ;
- chaque tuyau comporte au moins une zone d'une certaine longueur, distincte de sa tulipe, où la chemise extérieure est interrompue, laissant apparaître le matériau de remplissage, ce dernier ayant, dans la zone non recouverte par ladite chemise extérieure, un diamètre extérieur égal au diamètre extérieur de ladite chemise extérieure ;
- le diamètre extérieur maximal du tube intérieur est compris entre les diamètres intérieur et extérieur de la chemise extérieure ;
- la tranche d'extrémité de la tulipe de chaque tuyau est prolongée par un rebord extérieur.

L'invention a également pour objet un tuyau de fonçage destiné à une ligne de tuyaux de fonçage telle que définie plus haut.

Des modes de réalisation préférés de l'invention vont être décrits plus en détails ci-dessous en se référant aux dessins annexés, donnés uniquement à titre d'exemple et sur lesquels :
- la Figure 1 est une vue en coupe longitudinale partielle de deux tuyaux de fonçage adjacents selon l'invention;
- la Figure 2 est une vue de détail d'une variante de l'extrémité découverte d'un tuyau de fonçage selon la Figure 1;
- la Figure 3 est une vue en coupe longitudinale partielle d'une variante des tuyaux de fonçage selon la Figure 1;
- les Figures 4, 5, 6 et 7 sont des vues en coupe longitudinale partielle de variantes supplémentaires du tuyau de fonçage selon la Figure 1;
- les Figures 8A et 8B sont des vues de détail, respectivement, d'une variante de l'extrémité découverte et d'une variante de l'extrémité d'emboîtement d'un tuyau de fonçage suivant la Figure 7;
- les Figures 9 à 13 sont des vues en coupe longitudinale partielle de variantes supplémentaires des tuyaux de fonçage de la Figure 1.

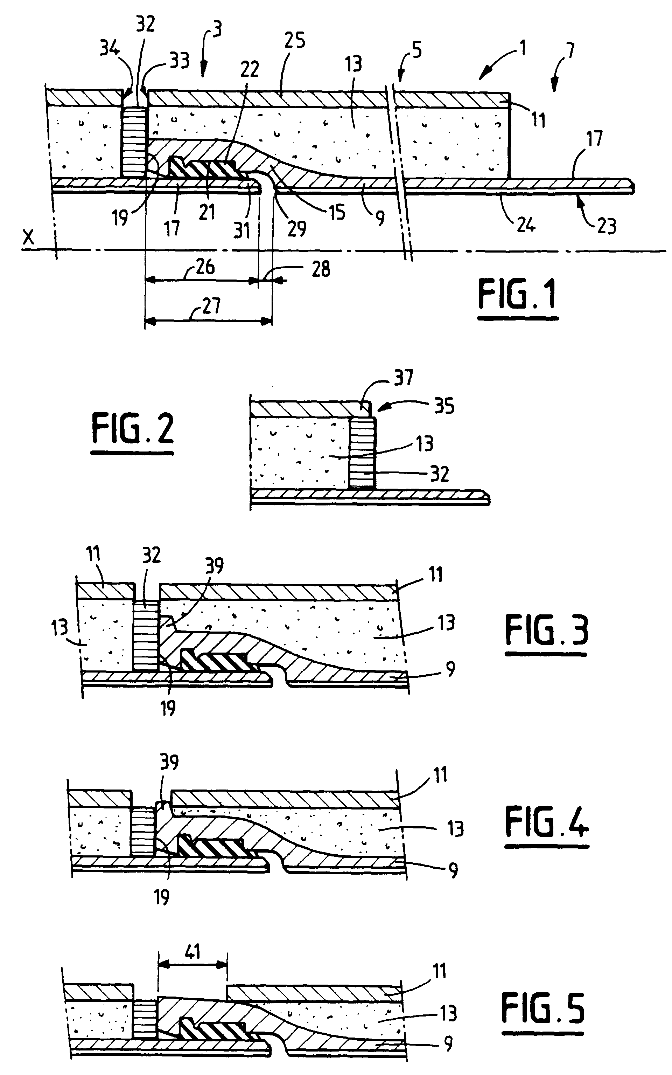

On se réfère à la Figure 1, faisant apparaître en coupe longitudinale un tuyau de fonçage selon l'invention et l'extrémité découverte d'un tuyau de fonçage adjacent au premier, montrant ainsi le principe de l'emboîtement des tuyaux les uns dans les autres afin de former une ligne de tuyaux. Il est à noter que la Figure 1 ne représente que la partie de la coupe située au-dessus de l'axe de révolution X-X, la partie de la coupe située en-dessous dudit axe, rigoureusement symétrique, n'étant pas représentée. Ceci vaut également pour les autres Figures en coupe.

Dans le sens longitudinal, chaque tuyau 1 se compose, de la gauche vers la droite sur la Figure 1, d'une extrémité d'emboîtement 3, d'un fût 5, et d'une extrémité découverte 7, correspondant à l'extrémité lisse ou bout uni d'un tube intérieur 9.

Dans le sens transversal par rapport à l'axe X-X, chaque tuyau 1 se compose du tube intérieur 9, et d'un habillage externe composé d'une chemise extérieure 11 et d'un matériau de remplissage 13 remplissant l'espace annulaire entre ledit tube intérieur 9 et ladite chemise extérieure 11.

Au voisinage de l'extrémité d'emboîtement 3, le tube intérieur 9 comporte une partie évasée ou tulipe 15 venant s'emboîter sur l'extrémité lisse ou bout uni 17 du tube intérieur du tuyau de fonçage adjacent. La tulipe du tube intérieur 9 se termine par une collerette intérieure 19 sensiblement perpendiculaire à l'axe X-X du tuyau 1. Le profil de la face interne 21 de la tulipe du tube intérieur est connu en soi, et conçu de façon à faciliter le raccordement étanche avec jeu radial sur l'extrémité lisse du tube intérieur 9 du tuyau adjacent, avec interposition d'une garniture d'étanchéité 22 à compression radiale. Le matériau constituant le tube intérieur du tuyau 1 peut-être notamment, de façon classique, de la fonte ou une autre matière métallique appropriée. De façon optionnelle, en fonction des effluents véhiculés dans la ligne de tuyaux, la face interne 23 du tube intérieur 9 peut être revêtue d'une couche de protection 24 appropriée.

L'habillage 11, 13 enveloppe le tube intérieur 9 sur une partie de sa longueur, distincte du bout uni 17 dudit tube.

La chemise extérieure 11, de préférence réalisée d'une matière métallique, notamment en fonte ou en acier, possède une forme cylindrique dont la face externe 25 définit l'enveloppe extérieure du tuyau 1 et, sur toute la longueur de ce tuyau, son diamètre maximal. L'épaisseur de métal de ladite chemise extérieure est aisément choisie par l'homme de métier de façon à convenir à l'utilisation particulière du tuyau de fonçage. La longueur de la chemise extérieure 11 est inférieure à la longueur du tube intérieur 9, de façon que, avec la tranche d'extrémité gauche de la chemise coplanaire à la collerette 19, chaque tuyau 1 possède une extrémité découverte 7 faisant directement apparaître le bout uni 17 du tube intérieur 9 sur une certaine longueur, pour permettre l'emboîtement du tuyau de fonçage adjacent. Le diamètre intérieur de la chemise extérieure 11 est supérieur au diamètre extérieur maximal du tube intérieur 9, sauf, en variante, peut-être à l'extrémité de la partie évasée 15 de celui-ci (voir ci-dessous les variantes des Figures 4, 5, 10 et 11). Ainsi, on ménage entre le tube intérieur 9 et la chemise extérieure 11 un espace annulaire qui est comblé, sur toute la longueur de la chemise extérieure, par un matériau de remplissage 13. De préférence, ce matériau de remplissage est constitué par du béton, armé ou non, ou par un mortier de ciment.

Les longueurs respectives de la chemise extérieure 11, de la zone comblée avec du matériau de remplissage 13, et de la tulipe 15 du tube intérieur 9 sont choisies de telle manière que, pendant le fonçage, la longueur 26 du bout uni effectivement emboîtée est inférieure à la profondeur 27 de la tulipe. Ainsi, il existe un jeu 28 entre le fond 29 de la tulipe 15 du tube intérieur 9 et l'extrémité 31 du bout uni du tube intérieur du tuyau adjacent. De cette façon, il n'y a pas de contact fonte à fonte dans le sens axial entre les tubes intérieurs de deux tuyaux de fonçage adjacents, la poussée axiale des tuyaux les uns sur les autres, lors de leur installation, étant transmise par au moins une partie de l'habillage, en l'occurrence par le matériau de remplissage 13.

De préférence, la poussée axiale est transmise par l'intermédiaire d'une cale de répartition de poussée 32, de forme annulaire, réalisée en une matière capable de se déformer légèrement sous l'effet de la poussée, par exemple réalisée en bois. Cette cale est intercalée entre la face radiale ou tranche d'extrémité 33, côté emboîtement, d'un tuyau de fonçage, et la face radiale 34 de l'habillage du tuyau adjacent. Cette cale 32 a un diamètre extérieur légèrement inférieur au diamètre intérieur de la chemise extérieure 11. En variante, la cale 32 peut être réalisée en matériaux à base de bois (aggloméré, contreplaqué), ou en d'autres matériaux, notamment en matière plastique. Elle peut également être composite, par exemple comporter un anneau extérieur ou intérieur en élastomère.

Selon le mode de réalisation représenté à la Figure 2, dans le cas de l'utilisation d'une telle cale de poussée 33, le matériau de remplissage 13 s'arrête, du côté de l'extrémité lisse du tube intérieur 9, à une faible distance de l'extrémité 35 de la chemise extérieure. De cette façon, la chemise extérieure forme un prolongement 37 par rapport au matériau de remplissage 13, ledit prolongement 37 venant recouvrir presque totalement la cale de poussée 33, ce qui a pour effet de conserver à la ligne de tuyaux une enveloppe extérieure rigoureusement cylindrique dans le cas de l'utilisation d'une cale de poussée.

Les Figures 3 à 11 représentent des variantes d'exécution comportant des modifications de détail par rapport aux tuyaux de fonçage dont le principe est illustré à la Figure 1.

Ainsi, la Figure 3 fait apparaître un tuyau intérieur 9 possédant dans le prolongement de la collerette 19 un rebord extérieur 39. Ce rebord 39 a pour effet d'augmenter le maître-couple de la tulipe 19, et donc de faciliter la transmission indirecte d'une poussée axiale plus élevée, sous l'effet de la poussée directe imprimée au matériau de remplissage 13.

Dans la Figure 4, un tel rebord 39 subsiste, mais, dans cette variante, le rebord 39 a un diamètre extérieur supérieur au diamètre intérieur de la chemise extérieure 11, tout en restant inférieur au diamètre extérieur de celle-ci. Dans cette réalisation, la poussée axiale est transmise uniquement par contact entre la collerette 19 et le rebord 39 d'une part, et la cale de poussée 32 d'autre part, sans que cependant les tubes intérieurs des tuyaux adjacents ne viennent en contact axial.

Comme représenté à la Figure 5, si le diamètre extérieur du tube intérieur 9 côté emboîtement est plus élevé que le diamètre intérieur de la chemise extérieure 11, l'extrémité de celle-ci doit être en retrait d'une certaine longueur 41 par rapport à la collerette d'emboîtement 19.

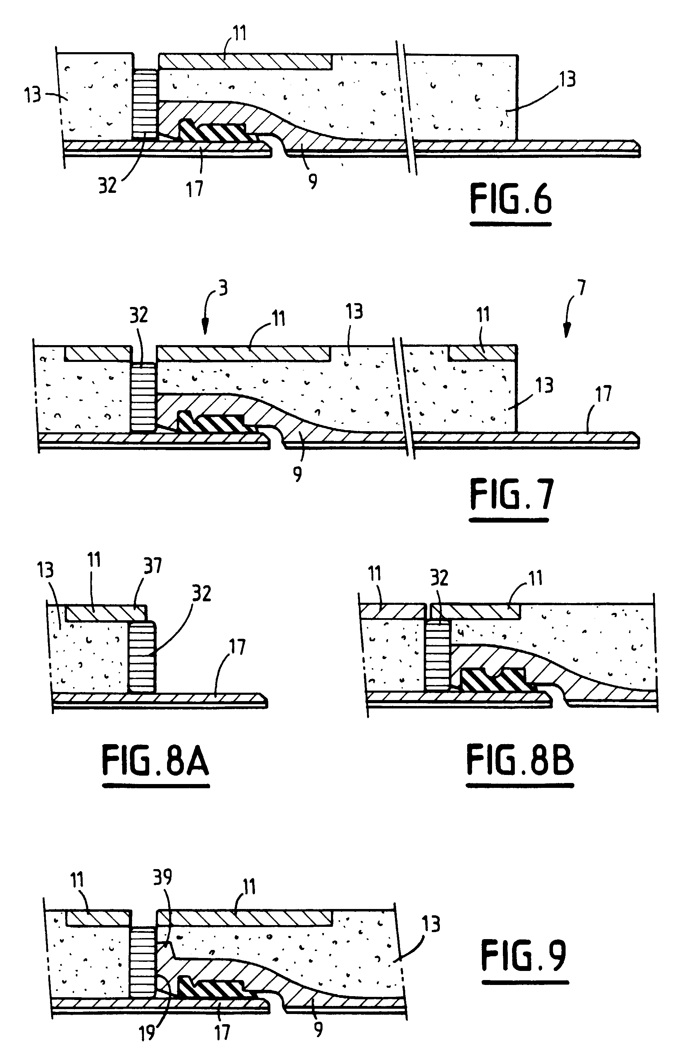

Selon d'autres modes de réalisation représentés dans les Figures 6 à 11, le tuyau 1 comporte au moins une zone d'une certaine longueur où la chemise extérieure 11 est interrompue. Ainsi, dans la Figure 6, la chemise extérieure 11 n'existe qu'au voisinage de l'extrémité d'emboîtement 3. Dans la Figure 7, la chemise extérieure 11 est réalisée en deux parties, au voisinage des deux extrémités 3 et 7 du tuyau. Dans la Figure 8A, une chemise extérieure interrompue est combinée avec l'existence d'un prolongement 37 de la chemise par rapport au matériau de remplissage 13, de façon analogue à la réalisation représentée à la Figure 2. La cale 32 est alors, comme à la Fig.2, partiellement recouverte par l'extrémité saillante de la chemise. Dans la Fig.8B, au contraire, la chemise 11 dépasse par rapport au matériau 13 du côté de la tulipe 15, ce qui lui permet de nouveau de recouvrir partiellement la cale 32. Un tel recouvrement évite la pénétration de corps étrangers risquant d'altérer la bonne répartition de la poussée.

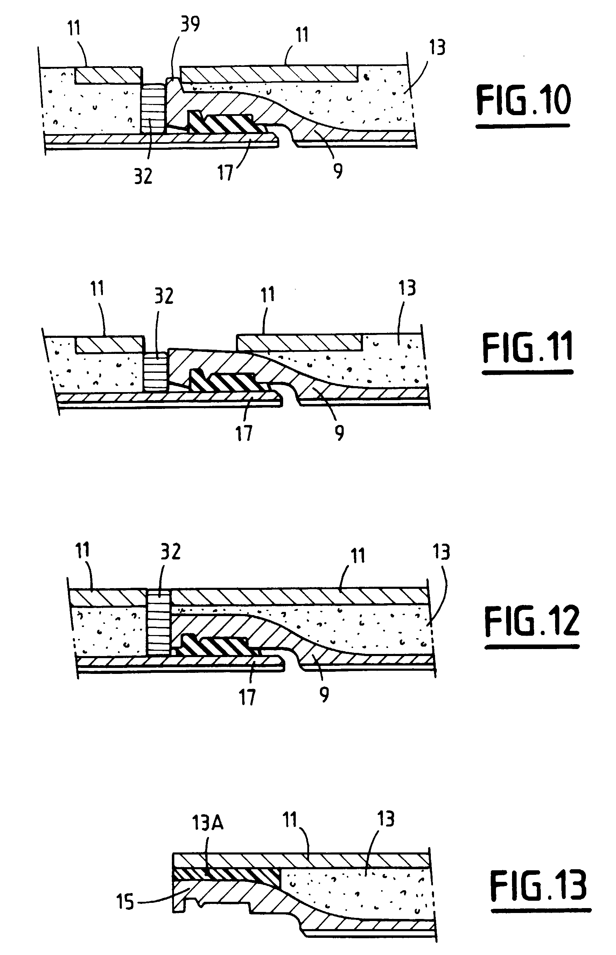

Les tuyaux représentés à la Figure 9 combinent l'existence d'une chemise extérieure 11 interrompue et l'existence d'un tube intérieur 9 pourvu d'un rebord 39 dans le prolongement de la collerette 19, de façon similaire à la réalisation représentée à la Figure 3. Les Figures 10 et 11 représentent des tuyaux de fonçage ayant en combinaison une chemise extérieure 11 interrompue et les caractéristiques décrites en relation avec les Figures 4 et 5 respectivement.

De préférence, dans tous les cas où on utilise une chemise extérieure interrompue, la zone annulaire correspondant à cette interruption est comblée avec du matériau de remplissage 13, afin de conserver l'enveloppe cylindrique des tuyaux.

La variante de la Figure 12 est similaire à celle de la Figure 1, à ceci près que le diamètre extérieur de la cale 32 est pratiquement égal à celui de la chemise 11. Dans ce cas, la poussée s'exerce également sur cette chemise.

Pendant l'installation des tuyaux de fonçage selon l'invention, la poussée axiale est transmise par contact entre les faces axiales 33, 34 de deux tuyaux 1 adjacents, directement ou par l'intermédiaire d'une cale 32. Le tuyau de fonçage tel que décrit précédemment possède l'avantage fondamental d'éviter qu'il y ait un contact fonte sur fonte, pendant le fonçage, entre les tubes intérieurs de deux tuyaux adjacents. Ainsi, la transmission de la poussée ne se faisant pas directement par la fonte, il n'y a pas de risque d'endommagement de celle-ci, ou du revêtement intérieur 24 éventuel, et en conséquence, les performances d'étanchéité et de longévité du tuyau ne sont pas affectées par l'opération de pose.

Par ailleurs, l'utilisation d'une cale en bois ou analogue permet également d'éviter toute friction directe fonte sur matériau de remplissage, ou métal sur métal au niveau de la chemise extérieure. De plus, la chemise extérieure constitue un moule perdu pour le matériau de remplissage, ce qui facilite la fabrication du tuyau selon l'invention et permet d'éviter le recours à une armature de ce matériau.

En outre, le matériau de remplissage 13 confiné entre la chemise extérieure 11 et le tube intérieur 9 est sollicité en compression longitudinale dans un espace qui se rétrécit vers l'avant, autour de la tulipe 15. Son expansion radiale par effet de Poisson conduit à retransmettre une partie de la poussée longitudinale à l'acier de la chemise extérieure agissant comme une frette, et à la fonte du tube intérieur. Ces deux matériaux sont donc indirectement associés au matériau de remplissage 13 pour la transmission de la poussée axiale, ce qui a pour effet d'augmenter la poussée axiale admissible, et par suite la longueur de la ligne de tuyaux fonçables entre deux puits d'accès.

En variante (Figure 13), le matériau de remplissage peut être composite, par exemple être constitué d'une matière plastique (polyéthylène, polyuréthane, résine époxy) ou élastomère en 13A au droit de la tulipe 15.

## Revendications

1. Ligne de tuyaux de fonçage, du type constitué d'une succession de tuyaux de fonçage (1) comportant chacun :
- un tube intérieur métallique (9), notamment en fonte, comportant à une extrémité une tulipe d'emboîtement (15) évasée présentant une certaine profondeur (27), et, à son autre extrémité, un bout uni (7) destiné à être emboîté sur une certaine longueur (26) dans la tulipe d'emboîtement (15) d'un tuyau adjacent, et
- un habillage (11, 13) dudit tube intérieur (9), extérieurement cylindrique, enveloppant ledit tube intérieur (9) sur une partie de sa longueur distincte de son bout uni (7) et définissant le diamètre extérieur maximal du tuyau, la longueur (26) de bout uni (7) emboîtée à chaque jonction entre tuyaux étant inférieure à ladite profondeur (27) de la tulipe,
caractérisée en ce que ledit habillage (11, 13) comporte d'une part une chemise extérieure (11) cylindrique centrée sur ledit tube intérieur (9) et recouvrant la tulipe (15) de façon à définir un espace annulaire se rétrécissant au droit de la tulipe, et d'autre part au moins un matériau de remplissage (13) confiné dans ledit espace annulaire, et en ce que la poussée axiale est transmise, côté bout uni, de la tranche d'extrémité de la tulipe à au moins une partie de l'habillage (11, 13), sans contact axial entre les tubes intérieurs (9) des tuyaux adjacents.

2. Ligne de tuyaux selon la revendication 1,
caractérisée en ce qu'une cale de répartition de poussée (32), notamment de forme annulaire, est interposée entre la tranche d'extrémité de la tulipe (15) et l'habillage (11, 13) adjacent.

3. Ligne de tuyaux selon la revendication 2,
caractérisée en ce que ladite cale de répartition de poussée a un diamètre extérieur inférieur au diamètre intérieur de ladite chemise extérieure (11).

4. Ligne de tuyaux selon la revendication 3,
caractérisée en ce que le matériau de remplissage (13) s'arrête à une faible distance en retrait d'une extrémité de la chemise extérieure (11), de façon que la chemise forme un prolongement (37) recouvrant la cale (32).

5. Ligne de tuyaux selon la revendication 2,
dans laquelle, aux extrémités de chaque tuyau (1), la chemise (11) se termine dans le plan d'extrémité de la tulipe (15) et dans celui du matériau de remplissage (13), caractérisée en ce que ladite cale de répartition de poussée a un diamètre extérieur au plus égal à celui de ladite chemise.

6. Ligne de tuyaux selon la revendication 2,
caractérisée en ce que chaque tuyau (1) comporte au moins une zone d'une certaine longueur, distincte de sa tulipe (15), où la chemise extérieure (11) est interrompue, laissant apparaître le matériau de remplissage (13), ce dernier ayant, dans la zone non couverte par ladite chemise extérieure (11), un diamètre extérieur égal au diamètre extérieur de ladite chemise extérieure (11).

7. Ligne de tuyaux selon l'une quelconque des revendications 3 à 6, caractérisée en ce que le diamètre extérieur maximal du tube intérieur (9) est compris entre les diamètres intérieur et extérieur de la chemise extérieure (11).

8. Ligne de tuyaux selon l'une quelconque des revendications 1 à 7, caractérisée en ce que la tranche d'extrémité de la tulipe (15) de chaque tuyau (1) est prolongée par un rebord extérieur (39).

9. Tuyau de fonçage pour une ligne de tuyaux de fonçage suivant l'une quelconque des revendications précédentes.

## Patentansprüche

1. Rohrvortriebsstrang, der der Art nach von einer Folge von Vortriebsrohren (1) gebildet ist, die jeweils die folgenden Merkmale aufweisen:
- ein Innenrohr (9) aus Metall, insbesondere aus Guß, mit einer erweiterten Aufweitung (15) zum Aufstecken am einen Ende, die eine gewisse Tiefe (27) darbietet, und an seinem anderen Ende mit einem glatten Endstück (7), das dazu bestimmt ist, über eine gewisse Länge (26) in die Aufweitung (15) zum Aufstecken eines benachbarten Rohres eingeschoben zu werden, und
- eine Umkleidung (11, 13) des genannten Innenrohrs (9), die außen zylindrisch ist, das genannte Innenrohr (9) über einen Abschnitt seiner Länge umhüllt, und die sich von seinem glatten Endstück (7) unterscheidet sowie den maximalen Außendurchmesser des Rohres festlegt, wobei die Länge (26) des glatten Endstücks (7), das an jeder Verbindung zwischen Rohren eingeschoben ist, kleiner ist als die genannte Tiefe (27) der Aufweitung,
**dadurch gekennzeichnet, daß**
die genannte Umkleidung (11, 13) einerseits einen äußeren, zylindrischen Mantel (11) aufweist, der auf das genannte Innenrohr (9) zentriert ist und die Aufweitung (15) derart abdeckt, daß ein Ringraum gebildet ist, der sich längs der Aufweitung verengt, sowie andererseits mindestens ein Füllmaterial (13), das im genannten Ringraum eingeschlossen ist, und daß die axiale Schubkraft auf der Seite des glatten Endstücks von der Endschnittfläche der Aufweitung auf mindestens einen Abschnitt der Umkleidung (11, 13) übertragen wird, ohne daß eine axiale Berührung zwischen den Innenrohren (9) benachbarter Rohre vorliegt.

2. Rohrstrang nach Anspruch 1, dadurch gekennzeichnet, daß eine Beilage (32) zur Verteilung der Schubkraft, die insbesondere ringförmig ist, zwischen der Endschnittfläche der Aufweitung (15) und der benachbarten Umkleidung (11, 13) eingesetzt ist.

3. Rohrstrang nach Anspruch 2, dadurch gekennzeichnet, daß die genannte Beilage zur Verteilung der Schubkraft einen Außendurchmesser aufweist, der kleiner ist als der Innendurchmesser des genannten äußeren Mantels (11).

4. Rohrstrang nach Anspruch 3, dadurch gekennzeichnet, daß das Füllmaterial (13) um einen geringen Abstand von einem Ende des äußeren Mantels (11) zurückgesetzt derart endet, daß der Mantel eine Verlängerung (37) bildet, die die Beilage (32) abdeckt.

5. Rohrstrang nach Anspruch 2, bei dem an den Enden eines jeden Rohres (1) der Mantel (11) in der Endebene der Aufweitung (15) und der des Füllmaterials (13) endet, dadurch gekennzeichnet, daß die genannte Beilage zur Aufteilung der Schubkraft einen Außendurchmesser aufweist, der höchstens gleich ist dem des genannten Mantels.

6. Rohrstrang nach Anspruch 2, dadurch gekennzeichnet, daß jedes Rohr (1) mindestens eine Zone mit einer gewissen Länge aufweist, die sich von seiner Aufweitung (15) unterscheidet, wo der äußere Mantel (11) unterbrochen ist und das Füllmaterial (13) freiliegt, welches seinerseits in der nicht vom genannten äußeren Mantel (11) abgedeckten Zone einen Außendurchmesser aufweist, der gleich ist dem Außendurchmesser des genannten äußeren Mantels (11).

7. Rohrstrang nach irgendeinem der Ansprüche 3 bis 6, dadurch gekennzeichnet, daß der maximale Außendurchmesser des Innenrohrs (9) zwischen dem Innendurchmesser und dem Außendurchmesser des äußeren Mantels (11) liegt.

8. Rohrstrang nach irgendeinem der Ansprüche 1 bis 7, dadurch gekennzeichnet, daß die Endschnittfläche der Aufweitung (15) eines jeden Rohres (1) um einen äußeren Rand (39) verlängert ist.

9. Vortriebsrohr für einen Rohrvortriebsstrang nach irgendeinem der vorangehenden Ansprüche.

## Claims

1. Forward thrust pipeline of the type consisting of a succession of forward thrust pipes (1) each comprising:
- a metallic internal tube (9), in particular of cast iron, comprising, at one extremity, a flared fitting socket (15) having a certain depth (27) and, at its other extremity, a flat end (7) intended to be fitted over a certain length (26) in the fitting socket (15) of an adjacent pipe, and
- an externally cylindrical covering (11, 13) for said internal tube (9) surrounding said internal tube (9) over a portion of its length distinct from its flat end (7) and defining the maximum external diameter of the pipe, the length (26) of flat end (7) fitted at each junction between pipes being smaller than said depth (27) of the socket,
characterised in that said covering (11, 13) comprises, on the one hand, an external cylindrical casing (11) centred on said internal tube (9) and covering the socket (15) so as to define an annular space which narrows in line with the socket and, on the other hand, at least one filling material (13) confined in said annular space and in that the axial thrust is transmitted, on the flat end side, from the extreme edge of the socket to at least a portion of the covering (11, 13) without axial contact between the internal tubes (9) of the adjacent pipes.

2. Pipeline according to claim 1, characterised in that a thrust-distributing block (32), in particular of annular shape, is interposed between the extreme edge of the socket (15) and the adjacent covering (11, 13).

3. Pipeline according to claim 2, characterised in that said thrust-distributing block has an external diameter smaller than the internal diameter of said external casing (11).

4. Pipeline according to claim 3, characterised in that the filling material (13) stops a short distance back from one end of the external casing (11) so the casing forms an extension (37) covering the block (32).

5. Pipeline according to claim 2, in which, at the extremities of each pipe (1), the casing (11) ends in the extreme plane of the socket (15) and in that of the filling material (13), characterised in that said thrust-distributing block has an external diameter at most equal to that of said casing.

6. Pipeline according to claim 2, characterised in that each pipe (1) comprises at least one region of a certain length distinct from its socket (15) where the external casing (11) is interrupted revealing the filling material (13), the filling material (13) having an external diameter equal to the external diameter of said external casing (11) in the region not covered by said external casing (11).

7. Pipeline according to any one of claims 3 to 6, characterised in that the maximum external diameter of the internal tube (9) is comprised between the internal and external diameters of the external casing (11).

8. Pipeline according to any one of claims 1 to 7, characterised in that the extreme edge of the socket (15) of each pipe (1) is extended by an external rim (39).

9. Forward thrust pipe for a forward thrust pipeline according to any one of the preceding claims.
